# EUROPÄISCHE PATENTSCHRIFT

(11) **EP 1 455 099 B1**
(45) Veröffentlichungstag und Bekanntmachung des Hinweises auf die Patenterteilung: **26.04.2006**
(21) Anmeldenummer: 04003901.8
(22) Anmeldetag: 20.02.2004
(51) Int. Cl.: F16B 13/02, F16B 13/08, F16B 13/06

(54) **Dübel zur Montage von Bauteilen an Betondecken**
Peg for the assembly of construction units at concrete ceilings
Cheville à l'assemblage des éléments aux plafonds de béton

(30) Priorität: 04.03.2003 DE 20303459 U
(43) Veröffentlichungstag der Anmeldung: 08.09.2004
(73) Patentinhaber: SMK Meister GmbH & Co. KG, 72293 Glatten (DE)
(72) Erfinder: Fahrner, Frank, 72290 Lossburg (DE)
(74) Vertreter: Möbus, Daniela

(56) Entgegenhaltungen:
- US-A- 2 667 037
- US-A- 4 884 931
- US-A1- 2001 010 787

## Beschreibung

Die Erfindung betrifft ein Verfahren zur Herstellung eines Dübels zur Montage von Bauteilen an Betondecken, mit einem als Hohlkörper ausgebildeten Grundkörper, der im vorderen Bereich einen Verjüngungsabschnitt aufweist, welcher in einen sich konusförmig erweiternden Bereich am vorderen Ende des Dübels übergeht, wobei der Verjüngungsbereich von einer auf der Außenseite mit Widerhaken versehenen Spange mit Spiel umgeben ist.

Ein solches Herstellungsverfahren ist bekannt aus der US-A-4,884,931. Der entsprechende Dübel besteht aus mehreren Teilen, insbesondere einen angeformten Konus sowie eine zusätzliche Spange, die manuell zusammenmontiert werden müssen. Da es sich bei derartigen Dübeln um ausgesprochene Massenartikel handelt, die in extrem großen Stückzahlen hergestellt werden, schlägt dieser zusätzliche Montage-Arbeitsgang wirtschaftlich ganz erheblich zu Buche.

Des Weiteren sind massive Nageldübel bekannt. Der Grundkörper des Nageldübels übernimmt die Rolle eines Nagels und wird dabei von der mit Widerhaken versehenen Spange an der Betondecke gehalten und trägt die Last der Abhängungen. Die Nageldübel müssen daher bestimmte Sicherheitskriterien erfüllen und unterliegen einer bauaufsichtlichen Zulassung.

Nach dem Stand der Technik wird der Grundkörper eines Nageldübels aus Vollmaterial hergestellt, sodass der Materialbedarf bei der Fertigung entsprechend hoch ist. Zudem ist die Fertigung relativ aufwändig, weil sie mindestens zwei Arbeitsgänge zur Fertigung des Grundkörpers und der Spange benötigt, was sich nachteilig auf die Preisgestaltung der herkömmlichen Nageldübel auswirkt.

Der Erfindung liegt die Aufgabe zugrunde, einen kostengünstigen Nageldübel zu schaffen, der auch in der Fertigung relativ einfach ist.

Diese Aufgabe wird erfindungsgemäß mit einem Verfahren der eingangs genannten Art dadurch gelöst, dass der Dübel ein Nageldübel ist und als Hohlkörper zusammen mit der Spange in einem Arbeitsgang gefertigt wird. Damit kann der Materialverbrauch bei der Herstellung erheblich reduziert und wesentliche Preisvorteile gegenüber den herkömmlichen Nageldübein erzielt werden, ohne dass dabei die bauaufsichtlichen Sicherheitskriterien verletzt werden. Insbesondere umfasst das erfindungsgemäße Herstellungsverfahren lediglich einen Arbeitsgang, während bei der Herstellung des massiven Dübels mindestens ein zweiter Arbeitsgang benötigt wird.

Als Material kommen verschiedene Möglichkeiten in Frage, jedoch ist für den Hohlkörper gewalztes Metall am besten geeignet. Vorteilhafterweise können daher der Grundkörper und die Spange aus Blech gefertigt sein. Zur Erzielung weiterer Herstellungsvorteile kann der Dübel ein Stanzteil sein.

Zweckmäßigerweise kann der Dübel am hinteren Ende einen Kopf mit größerem Durchmesser als der Grundkörper aufweisen, mit Hilfe dessen Gegenstände mühelos an die Betondecke befestigt werden können.

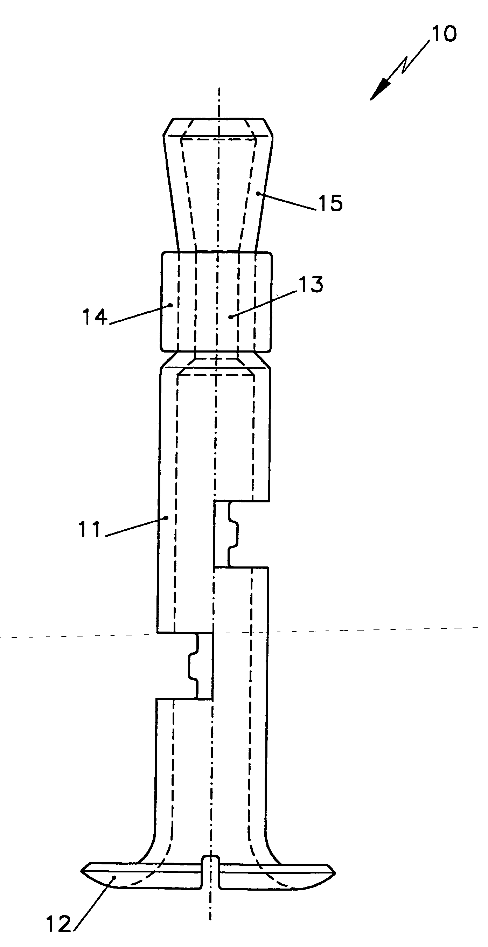

Nachfolgend wird ein bevorzugtes Ausführungsbeispiel eines mit dem erfindungsgemäßen Verfahren hergestellten Nageldübels anhand der Zeichnung näher erläutert.

Die einzige Figur zeigt eine Seitenansicht eines mit dem erfindungsgemäßen Verfahren hergestellten Nageldübels 10, der einen Hohlkörper als Grundkörper 11 aufweist, welcher am hinteren Ende mit einem Kopf 12 versehen ist, der einen größeren Durchmesser als der Grundkörper 11 besitzt. Im vorderen Bereich weist der Grundkörper 11 einen Verjüngungsabschnitt 13 auf, welcher in einen sich konusförmig erweiternden Bereich 15 am vorderen Ende des Dübels übergeht. Der Verjüngungsbereich 13 des Grundkörpers 11 ist von einer Spange 14 mit Spiel umgeben, welche auf der Außenseite mit in der Figur nicht gezeigten Widerhaken versehen ist.

Der Nageldübel 10 wird beispielsweise aus einem verzinkten Metallband zum Hohlkörper gestanzt, an einem Ende mit dem Kopf 12, am anderen Ende mit dem Konus 15 und um den Verjüngungsbereich 13 mit der Spange 14 mit Spiel versehen. Er wird in einem Arbeitsgang gefertigt. Er kann leicht und schnell montiert werden, was sich bei Deckenmontagen als vorteilhaft erweist. Zur Montage wird der Dübel zunächst von Hand ins Bohrloch gedrückt, wo er durch die Flächenpressung des Grundkörpers 11 einen ersten Halt erfährt. Durch leichte Hammerschläge kann er vollständig ins Bohrloch eingetrieben werden, bis der Kopf 12 des Dübels 10 mit einer daran angebrachten Befestigung für ein Bauteil eben am Rand des Bohrlochs anliegt. Die Spange 14 verspannt sich dabei mit den Widerhaken im Beton. Kommt es durch Risse im Beton oder schwere Lasten am Dübel zu einer Lockerung des Presssitzes des Grundkörpers im Bohrloch, so sorgt der konusförmige Bereich 15, der am Ende einen größeren Außendurchmesser als der Innendurchmesser der Spange 14 aufweist, für einen Halt des Grundkörpers 11 in der Spange 14. Diese wird dabei sogar noch aufgeweitet und verkrallt sich somit noch besser im Beton.

Der mit dem erfindungsgemäßen Verfahren hergestellte Nageldübel 10 ist geeignet zur Befestigung von Latten, Kanthölzern, Holzkonstruktionen, Drahtabhängungen, Lochbändern, Metallprofilen, Holzwolleleichtbauplatten zur Deckenisolierung mit oder ohne Unterlegscheiben und verschiedenen Schienensystemen.

## Patentansprüche

1. Verfahren zur Herstellung eines Dübels zur Montage von Bauteilen an Betondecken, mit einem als Hohlkörper ausgebildeten Grundkörper (11), der im vorderen Bereich einen Verjüngungsabschnitt (13) aufweist, welcher in einen sich konusförmig erweiternden Bereich (15) am vorderen Ende des Dübels (10) übergeht, wobei der Verjüngungsbereich (13) von einer auf der Außenseite mit Widerhaken versehenen Spange (14) mit Spiel umgeben ist, **dadurch gekennzeichnet, dass** der Dübel 10 ein Nageldübel ist und als ein Hohlkörper zusammen mit der Spange (14) in einem Arbeitsgang gefertigt wird.

2. Verfahren nach Anspruch 1, **dadurch gekennzeichnet, dass** der Grundkörper (11) und die Spange (14) aus Blech gefertigt werden.

3. Verfahren nach Anspruch 1 oder 2, **dadurch gekennzeichnet, dass** der Dübel (10) als Stanzteil gefertigt wird.

4. Verfahren nach einem der Ansprüche 1 bis 3, **dadurch gekennzeichnet, dass** der Dübel (10) am hinteren Ende einen Kopf (12) mit größerem Durchmesser als der Grundkörper (11) aufweist.

## Claims

1. Method for producing a dowel for assembling construction units on concrete ceilings, comprising a base body (11) in the form of a hollow body which has in the front area a narrowing section (13) which merges in a conically expanding area (15) at the front end of the dowel (10), and the narrowing area (13) is surrounded with play by a clip (14) which is on the exterior side provided with barbed hooks, **characterised in that** the dowel (10) is a nail dowel which is manufactured as a hollow body in one production stage together with the clip (14).

2. Method according to Claim 1, **characterised in that** the base body (11 and the clip (14) are made of sheet metal.

3. Method according to Claim 1 or 2, **characterised in that** the dowel (10) is produced as a punched part.

4. Method according to one of Claims 1 to 3, **characterised in that** the dowel (10) comprises at the rear end a head (12) the diameter of which is larger than the base body (11).

## Revendications

1. Procédé pour la fabrication d'une cheville pour le montage d'éléments structurels sur des plafonds en béton, avec un corps de base (11) qui est conformé en corps creux et qui comporte, dans la zone avant, une portion rétrécie (13) qui se prolonge par une zone à élargissement conique (15) à l'extrémité avant de la cheville (10), la zone rétrécie (13) étant entourée avec jeu par une bague (14) pourvue d'ergots sur le côté extérieur, **caractérisé en ce que** la cheville (10) est une cheville-clou et est réalisée, sous la forme d'un corps creux, en une seule opération conjointement avec la bague (14).

2. Procédé selon la revendication 1, **caractérisé en ce que** le corps de base (11) et la bague (14) sont réalisés en tôle.

3. Procédé selon la revendication 1 ou 2, **caractérisé en ce que** la cheville (10) est réalisée sous la forme d'une pièce découpée.

4. Procédé selon une des revendications 1 à 3, **caractérisé en ce que** la cheville (10) comporte, à l'extrémité arrière, une tête (12) dont le diamètre est supérieur à celui du corps de base (11).
